# EUROPÄISCHE PATENTANMELDUNG

(11) **EP 1 832 769 A2**
(43) Veröffentlichungstag der Anmeldung: **12.09.2007**
(21) Anmeldenummer: 07003943.3
(22) Anmeldetag: 27.02.2007
(51) Int. Cl.: F16D 13/58, F16D 13/71

(54) **Reibungskupplung**

(30) Priorität: 07.03.2006 DE 102006010338; 08.08.2006 DE 102006037023
(71) Anmelder: ZF FRIEDRICHSHAFEN AG, 88046 Friedrichshafen (DE)
(72) Erfinder: Link, Achim, 97422 Schweinfurt (DE); Röll, Gerhard, 97499 Donnersdorf (DE); Knauer, Wolfgang, 97486 Königsberg (DE)

(57) **Zusammenfassung**

Reibungskupplung, insbesondere für ein Kraftfahrzeug, mit einem Gehäuse (2), das mit einem Schwungrad (3) um eine gemeinsame Drehachse rotiert und mit einer Brennkraftmaschine verbunden ist, eine im Gehäuse drehfest aber axial verlagerbar Anpressplatte (5), eine zwischen der Anpressplatte und einer Reibfläche des Schwungrades mit mindestens einem Reibbelag (6) versehene Kupplungsscheibe (7), einer Membranfeder (8) mit daran ausgebildeten Betätigungszungen (22) zur Verschwenkung der Membranfeder um ihren Abstützbereich (23), welche die Anpressplatte mit einer Anpresskraft zur Beaufschlagung des Reibbelages beaufschlagen kann und sich an einem am Gehäuse ausgebildeten Auflagebereich (26) abstützt, vom Gehäuse sich erstreckende Halteelemente (9), die die Membranfeder gegenüber dem Gehäuse (2) direkt oder indirekt positionieren, an Durchgriffsbereichen (25) der Betätigungszungen durchgreifen und radial innerhalb angebracht sind, wobei ein Stützelement mit einem Auflageabschnitt vorgesehen ist, an dem die Membranfeder während eines Auskuppelvorganges abgestützt wird, wobei das Stützelement durch das Halteelement gegenüber der Membranfeder gehalten wird und mit dem Auflageabschnitt unter einer Vorspannung an der Membranfeder anliegt und nach radial innerhalb der Halteelemente sich erstreckende Fortsätze (11) aufweist, welche sich an den Betätigungszungen abstützen.

## Beschreibung

Die Erfindung betrifft eine Reibungskupplung, insbesondere für ein Kraftfahrzeug, mit einem Gehäuse, das mit einem Schwungrad um eine gemeinsame Drehachse rotiert und mit einer Brennkraftmaschine verbunden ist, eine im Gehäuse drehfest aber axial verlagerbare Anpressplatte, eine zwischen der Anpressplatte und einer Reibfläche des Schwungrades mit mindestens einem Reibbelag versehene Kupplungsscheibe, einer Membranfeder mit daran ausgebildeten Betätigungszungen zur Verschwenkung der Membranfeder um ihren Abstützbereich, welche die Anpressplatte mit einer Anpresskraft zur Beaufschlagung des Reibbelages beaufschlagen kann und sich an einem am Gehäuse ausgebildeten Auflagebereich abstützt, vom Gehäuse sich erstreckende Halteelemente, die die Membranfeder gegenüber dem Gehäuse direkt oder indirekt positionieren, an Durchgriffsbereichen der Betätigungszungen durchgreifen und radial innerhalb angebracht sind, ein Stützelement mit einem Auflageabschnitt an dem die Membranfeder während eines Auskuppelvorganges abgestützt wird, wobei das Stützelement durch das Halteelement gegenüber der Membranfeder gehalten wird.

Eine solche Kupplung ist beispielsweise aus der DE 195 47 559 C2 bekannt. Um eine reibschlüssige Kopplung zwischen der Kupplungsscheibe einerseits und dem Schwungrad samt Anpressplatte andererseits herstellen zu können, ist die Anpressplatte mittels einer Membranfeder mit einer Axialkraft beaufschlagbar. Im eingerückten Zustand presst die Membranfeder die Anpressplatte gegen das Schwungrad, während im ausgerückten Zustand die axiale Anpresskraft der Membranfeder weggenommen werden kann. Hierzu weist das radial innenliegende Ende der Membranfeder eine Anzahl Federzungen auf, die mit einem Ausrücker verbunden sind, mit dem die Federzungen in Achsrichtung bewegt werden können. Die Membranfeder wird mittels einer Anzahl Distanzbolzen an dem Kupplungsgehäuse gelagert, so dass sich die Membranfeder zwar mit dem Kupplungsgehäuse mitdreht, jedoch in Abhängigkeit der Stellung des Ausrückers entweder gegen die Anpressplatte drückt oder nicht.

Hierzu durchsetzen die Distanzbolzen die Membranfeder an entsprechenden Bereichen in der Feder. Um die Membranfeder im Bereich der Distanzbolzen relativ zum Kupplungsgehäuse axial festzulegen, sind Drahtringe oder Kippringe zwischen die Membranfeder und die radial verbreiterten Enden der Distanzbolzen gelegt, die somit einen axialen Anschlag für die Membranfeder bilden.

Um die Federkennlinie der auf die Anpressplatte wirkenden Kraft der Membranfeder in Abhängigkeit vom Einrückweg in einer gewünschten Weise zu beeinflussen, kann eine als Tellerfeder ausgebildete Zusatzfeder vorgesehen werden, die - wie die Membranfeder - durch die Distanzbolzen in Position gehalten wird. Die Zusatzfeder liegt mit ihrem radial innenliegenden Ende an einer Seite der Membranfeder an. Beim Ausrücken der Kupplungsvorrichtung erzeugt die Zusatzfeder eine gewünschte Zusatzkraft, so dass die Federkennlinie der Kupplungsvorrichtung über den Kupplungsweg eine gewünschte Größe und Form aufweist.

Nachteilig ist bei dieser Lösung, dass relativ viele Bauteile auf engem Raum untergebracht werden müssen, was die Herstell- und Montagekosten entsprechend hoch werden lässt. Auf dem Distanzbolzen sind die Membranfeder und die Zusatzfeder zu platzieren, wobei zusätzlich für deren axiale Sicherung und einer klemmfreien Schwenkbewegung der Membranfeder auf dem Bolzen weiterhin Draht- bzw. Kippringe angeordnet werden müssen, die für einen axialen Anschlag sorgen.

Der Erfindung liegt die Aufgabe zugrunde, eine Kupplungseinrichtung der eingangs genannten Art so weiterzubilden, dass eine einfache Bauart entsteht, bei der es dennoch möglich ist, über eine Zusatzfeder den Betätigungskraftverlauf am Ausrückelement und die Federkennlinie der auf die Anpressplatte einwirkenden Anpresskraft zumindest über einen Teil des Ausrückweges in gewünschter Weise zu beeinflussen. Dabei soll ein mit wenigen Bauteilen auskommendes Konzept erreicht werden, das kostengünstig herstellbar, einfach montierbar und betriebssicher ist.

Die Lösung dieser Aufgabe durch die Erfindung ist dadurch gekennzeichnet, dass ein Stützelement (10) mit einem Auflageabschnitt (27) vorgesehen ist, an dem die Membranfeder (8) während eines Auskuppelvorganges abgestützt wird und mit dem Auflageabschnitt (27) unter einer Vorspannung an der Membranfeder (8) anliegt, wobei das Stützelement (10) durch das Halteelement (9) gegenüber der Membranfeder (8) gehalten wird und nach radial innerhalb der Halteelemente (9) sich erstreckende Fortsätze aufweist, welche sich an den Betätigungszungen (22) abstützen können.

Es kann hierbei eine einfache Ausgestaltung der Reibungskupplung erfolgen, welche einerseits eine hohe Anpresskraft im eingekuppelten Zustand erreicht, keine unnötigen Verluste des Ausrückweges an den Betätigungszungen aufweist und eine geringe Ausrückkraft erlaubt.

Eine weitere Lösung der Erfindung wird erzielt, wenn ein Stützelement (10) mit einem Auflageabschnitt (27) vorgesehen ist, an dem die Membranfeder (8) während eines Auskuppelvorganges abgestützt wird, wobei das Stützelement (10) durch das Halteelement (9) gegenüber der Membranfeder (8) gehalten wird und davon sich erstreckende Fortsätze (11) aufweist, welche bei einem Auskuppelvorgang an der Membranfeder mit einer in Richtung Einkuppelstellung wirkenden Kraft an der Membranfeder (8) abstützbar sind.

Es kann hierbei eine einfache Ausgestaltung der Reibungskupplung erfolgen. Welche einerseits eine hohe Anpresskraft der Membranfeder im eingekuppelten Zustand aufweist und geringe Ausrückwegverluste an den Betätigungszungen und eine geringe Ausrückkraft aufweist und deren Betriebssicherheit insbesondere im ausgekuppelten Zustand gewährleistet ist. Durch eine in Richtung Einkuppelstellung wirkenden Kraft der Fortsätze oder des einen Fortsatzes wird sichergestellt, dass auch in der maximalen Auskuppelstellung eine in Richtung Einkuppeln wirkende Kraft auf die Anpressplatte und das Betätigungssystem wirkt unabhängig von der verbleibenden Restfederkraft der Membranfeder in dieser Stellung. Auch kann durch den Fortsatz oder die Fortsätze des Stützelementes erreicht werden, dass im Betätigungsabschnitt zwischen maximaler Einkuppelstellung und maximaler Auskuppelstellung eine ausreichende Rückstellkraft auf das Betätigungssystem der Reibungskupplung und der Anpressplatte in Richtung Einkuppeln verbleibt. Dies unabhängig davon, ob durch eine fertigungsbedingte Streuung der Kraft-Wegekurve der Membranfeder eine zumindest Bereichsweise ungünstige Federkraft der Membranfeder vorliegt. Fertigungsbedingte Schwankungen können so ausgeglichen werden und die Membranfeder sehr stark belastet werden und auf ihren Kraftverlauf direkt in der Einkuppelstellung hin ausgelegt werden. Dies erlaubt sowohl bei Reibungskupplungen mit Verschleißausgleich als auch ohne Verschleißausgleich des Abriebs der Reibbeläge eine Auslegung der Membranfeder in Richtung höherer Anpresskraft.

Besonders Platz sparend gestaltet sich die Ausgestaltung, wenn an den Stützelement die Fortsätze oder der Fortsatz sich nach radial innerhalb der Reibbeläge erstrecken.

Wenn die Fortsätze (11) im eingekuppelten Zustand der Reibungskupplung mit ihren Endbereichen (13) axial beabstandet zur Membranfeder (8) sind kann sich besonders vorteilhaft die in Richtung Einkuppeln gerichtete Abstützkraft der Fortsätze oder des Fortsatzes des Stützelementes auf einen Bereich der Auskuppelbewegung begrenzen, in dem die Restfederkraft der Membranfeder eine geringe oder sogar in Richtung negativ gehenden Größe einnimmt. Dies kann insbesondere im letzten Drittel der Auskuppelbewegung, besonders aber im Bereich zwischen dem Abheben der Anpressplatte von den Reibbelägen und der maximalen Auskuppelstellung der Fall sein.

Wenn die Fortsätze (11) im eingekuppelten Zustand der Reibungskupplung mit ihren Endbereichen (13) an der Membranfeder (8) anliegen lässt sich ein besonders harmonischer Übergang der mit der Auskuppelbewegung allmählich ansteigenden Abstützkraft erzielen wobei besonders vorteilhaft die Abstützkraft in Richtung Einkuppelstellung im eingekuppelten Zustand besonders gering, also beispielsweise nur wenig über Null beträgt und erst allmählich eine Anstieg, in vorteilhafter Weise mit einem steigenden Gradient aufweist, so dass erst in einem Endbereich der Auskuppelbewegung eine merkliche Abstützkraft erzielt wird.

Eine weitere erfindungsgemäße Ausgestaltung sieht daher auch noch vor, dass die Fortsätze (11) der Reibungskupplung mit ihren Endbereichen (13) an Betätigungszungen (22) der Membranfeder (8) anliegen oder zur Anlage kommen. Hier ergibt sich für die Rückstellkraft eine sehr vorteilhafte Ausnutzung der Hebelübersetzung der Membranfeder der Reibungskupplung, wobei die auf das Betätigungssystem wirkende Kraft möglichst gering ausfällt. Erfindungsgemäß können daher die Fortsätze oder der Fortsatz bis kurz vor oder an den radial inneren Endbereich der Betätigungszungen der Membranfeder, welcher nicht durch die Verbindung mit dem Betätigungssystem abgedeckt wird, heran reichen.

Eine weitere erfindungsgemäße Ausgestaltung sieht vor, dass die in Richtung Einkuppelstellung wirkende Kraft der Fortsätze (11) im eingekuppelten Zustand der Reibungskupplung ein Minimum aufweist. Es kann auch bei der Erfindung vorgesehen sein, dass die in Richtung Einkuppelstellung wirkende Kraft der Fortsätze (11) im eingekuppelten Zustand geringer ist als im ausgekuppelten Zustand der Reibungskupplung.
In beiden vorgenannten Fällen kann erfindungsgemäß vorgesehen sein, dass die in Richtung Einkuppelstellung wirkende Kraft der Fortsätze (11) in Richtung der ausgekuppelten Stellung der Reibungskupplung ansteigt.
Besonders vorteilhaft wird die Eigenfederkraft des Fortsatzes oder der Fortsätze des Stützringes ausgenutzt, wenn die in Richtung Einkuppelstellung wirkende Kraft der Fortsätze (11) oder des Fortsatzes im Bereich der ausgekuppelten Stellung der Reibungskupplung im Bereich eines Maximums sich befindet.

Weiterhin wird vorgeschlagen, dass der Fortsatz oder die Fortsätze (11) ausgehend von der eingekuppelten Stellung der Reibungskupplung erst nach einer Verschwenkbewegung der Membranfeder (8) zur Anlage an dieser kommen. Hierbei kann die Kraft-Wegekurve der Membranfeder in einem ersten Verschwenkbereich ausgehend von der eingekuppelten Stellung ungestört und ohne Reibung durch das Gleiten der Fortsätze an ihren Abstützpunkten an der Membranfeder oder den Betätigungszungen erfolgen, wodurch sich die Kupplung im Eingriffsbereich der Reibbeläge sehr fein dosieren lässt. Auch kann die Federkurve des Fortsatzes oder der Fortsätze des Stützringes besser auf den Auskuppelabschnitt abgestimmt werden, in dem eine in Richtung Einkuppelstellung gerichtete Abstützkraft gewünscht ist.
Hierbei kann vorgesehen sein, dass die Verschwenkbewegung zumindest den Abschnitt umfasst, bis zu dem die Anpressplatte (5) von den Reibbelägen (6) abhebt.
Erfindungsgemäß kann auch vorgesehen sein, dass die Verschwenkbewegung zumindest den Abschnitt umfasst, bis zu dem die Reibbeläge (6) sich axial entspannt haben.
Eine weitere erfindungsgemäße Ausgestaltung sieht vor, dass die Verschwenkbewegung zumindest den Abschnitt umfasst, bis zu dem die Reibbeläge (6) von den Gegenreibflächen an der Anpressplatte (5) oder dem Schwungrad (3) beginnen abzuheben.

Eine weitere erfindungsgemäße Ausgestaltung sieht vor, dass im Bereich der Maximalen Auskuppelstellung der Reibungskupplung das Stützelement (10) die Auskuppelbewegung der Membranfeder (8) begrenzt. Hierdurch kann ein automatisches Betätigungssystem zum Beispiel durch das sprunghafte Ansteigen der in Richtung Einkuppelstellung gerichteten Abstützkraft des Fortsatzes oder der Fortsätze das Erreichen der Endposition der Auskuppelbewegung erkennen. Auch kann hier ein Überdrücken der Reibungskupplung verhindert werden.

Eine weitere Variante sieht erfindungsgemäß vor, dass der Fortsatz oder die Fortsätze während eines Auskuppelvorganges durch Anlage an den Betätigungszungen den Ausrückkraftverlauf beeinflussen. Dies kann insofern ausgestaltet sein, dass der Fortsatz oder die Fortsätze anfangs eine sehr geringe Abstützkraft an den Betätigungszungen ausüben und mit steigendem Fortschritt der Auskuppelbewegung dieser allmählich ansteigt und gegen Ende der Auskuppelbewegung eine signifikante Gegenkraft auf den Ausrücker ausübt. Dies kann für automatisierte Kupplungsbetätigungen von Vorteil sein.

Gemäß der Erfindung wird alternativ vorgesehen, dass der Fortsatz oder die Fortsätze im eingekuppelten Zustand eine hohe Abstützkraft und im ausgekuppelten Zustand eine geringere Abstützkraft auf die Betätigungszungen ausüben. Hiermit kann die Anpresskraft auf die Reibbeläge erhöht werden und die Membranfeder ist im eingekuppelten Zustand auch bei Reibbelagverschleiß mit hoher Übertragungsfähigkeit versehen.

Besonders vorteilhaft gestaltet sich die Reibungskupplung, wenn das Stützelement als Tellerfeder ausgebildet ist. Dies erlaubt bei geringer Bauteilabmessung einen weiten nutzbaren Federweg. Wenn vorgesehen ist, dass die Fortsätze zusammen mit dem Stützelement ein Bauteil bilden, welches eine Federkraftlinie ähnlich einer Membranfeder aufweist wird der nutzbare Federweg erhöht und deren Betrieb erfolgt im Übertotpunkt, also die Federkraft steigt beim Entspannen der Feder an.

Vorteilhaft ist vorgesehen, dass die Abstützkraft des Fortsatzes oder der Fortsätze auf die Membranfeder zumindest über einen Teilbereich des Auskuppelweges abnimmt. Insbesondere wenn eine Variante entsprechend Anspruch 3 und den Erläuterungen bei Anspruch 2 zeitgleich erzielt werden soll. Hierbei kann auch vorgesehen sein, dass die Abstützkraft der Fortsätze während eines Auskuppelvorganges nach Abfallen der Abstützkraft in einem ersten Teilweg wieder ansteigt.

Eine besonders kostengünstige Fertigung und Dauerhaltbarkeit wird erreicht, wenn der Fortsatz oder die Fortsätze einstückig mit dem Stützelement ausgebildet sind. Erfindungsgemäß besteht das Stützelement auch hierbei aus Federstahl.

Wird das Stützelement als ringscheibenförmiges Bauteil mit hoher axialer Steifheit ausgeführt ergibt sich insbesondere bei Tellerfedern mit hoher Anpresskraft ein geringer Ausrückwegverlust infolge elastischer Durchbiegung des Stützelements und die Dosierbarkeit während des Kuppelvorganges wird exakter. Eine vorteilhafte Ausgestaltung ergibt sich dabei, wenn das Stützelement eine topfartige Form aufweist. So kann die federelastische Eigenschaft und die hohe axiale Steifheit zusammen erzielt werden.

Besonders genau wird die Membranfeder festgehalten, wenn das Stützelement mit seinem Auflageabschnitt federvorgespannt an der Membranfeder anliegt. Dies erlaubt insbesondere bei einer Schrägstellung der Lage der Membranfeder zum Beispiel durch fortgeschrittenem Reibbelagverschleiß oder einem Setzen der Belagfederung und einem damit einhergehenden Anstieg der Anpresskraft eine verlustarme Betätigung.

Erfindungsgemäß wird vorgesehen, dass Betätigungszungen Ausnehmungen zum Durchgriff der Halteelemente aufweisen. Diese Ausnehmungen können vorteilhafterweise zwischen den Betätigungszungen eingebracht sein und wahlweise über zwei angrenzenden Betätigungszungen oder auch nur über eine Betätigungszunge sich erstrecken. Durch das Ausbilden der Durchgriffsbereiche als Ausnehmungen können besonders steife Halteelemente verwendet werden. Hierbei können die Halteelemente Distanzbolzen sein, die an dem Gehäuse angebracht sind.

Durch das Stützelement wird vorteilhafterweise erzielt, dass nur ein Teil der Durchgriffsbereiche von einem Halteelement durchgriffen werden. Durch die verringerte Anzahl der Halteelemente reduziert sich der Herstellaufwand und die Massenträgheit um die Rotationsachse verringert sich, da zum Beispiel die ähnlich einem Niet ausgebildeten Distanzbolzen große Masse aufweisen.

Eine weitere Ausgestaltung sieht hier vor, dass eine Anzahl der Betätigungszungen Ausnehmungen zum Durchgriff der Halteelemente aufweisen und eine Anzahl nicht diese Ausnehmungen aufweist. Hierbei kann der Herstellaufwand für die Betätigungszungen reduziert und eine dennoch steife Membranfeder geschaffen werden. Insbesondere Durchbiegungsverluste der Betätigungszungen beim Auskuppeln reduzieren sich hier auf ein Minimum wodurch eine Verlustfreies Kuppeln erzielt wird.

Eine besondere Ausgestaltung wird hierbei erzielt, wenn Fortsätze an den Betätigungszungen sich abstützen, welche keine Ausnehmungen zum Durchgriff der Halteelemente aufweisen. Hierbei kann es vorgesehen sein, dass der Fortsatz oder die Fortsätze sich nur an der oder den Betätigungszungen abstützen, welche nicht oder nur unwesentlich durch Ausnehmungen in ihrer Steifheit reduziert sind. Dies erlaubt eine verlustarme Erhöhung der Einkuppelkraft durch die in Richtung Einkuppeln gerichtete Federkraft des Stützelementes und deren Übertragung vermittels den Fortsätzen. Erfindungsgemäß kann auch vorgesehen sein, dass der Fortsatz oder die Fortsätze eine hohe Eigensteifheit aufweisen. Es ist aber auch möglich, dass Fortsätze sich auch an Betätigungszungen abstützen, welche eine Ausnehmung aufweisen. Dies kann insbesondere dann von Vorteil sein, wenn eine hohe Anzahl von Halteelementen erforderlich ist und die die Einkuppelkraft erhöhende Federkraft des Stützelementes flächig auf die Membranfeder aufgebracht werden soll.

Eine weitere Ausgestaltung sieht vor, dass das Stützelement mit zumindest einem Halteelement in Umfangsrichtung formschlüssig verbunden ist. Alternativ kann auch vorgesehen sein, dass das Stützelement mit zumindest einem Halteelement in Umfangsrichtung drehfest verbunden ist. Dies um zu Verhindern, dass das Stützelement mit seinem Auflageabschnitt durch zum Beispiel infolge Vibrationen erzeugten Relativbewegungen gegenüber der Membranfeder in Umfangsrichtung sich eingräbt, also einen Materialabtrag auslöst. Auch ist so das Stützelement in Umfangsrichtung gegenüber den Halteelementen fest womit der zuvor genannte Vorteil auch hier zutrifft. Insbesondere bei indirekter Verbindung beziehungsweise Anlage des Stützelementes am Halteelement kann auch vorgesehen sein, dass das Stützelement vermittels dem Halteelement in Umfangsrichtung drehfest gegenüber diesem gelagert ist. Weiterhin kann vorgesehen sein, dass das Stützelement zur drehfesten Lagerung am Halteelement eine Vertiefung aufweist, in die dieses eingreift.

Eine weitere erfindungsgemäße Variante sieht vor, dass das Stützelement drehfest gegenüber der Membranfeder gelagert ist. Hierbei kann in weiterer Ausgestaltung das Stützelement in Umfangsrichtung formschlüssig mit der Membranfeder in Eingriff stehen. Damit kann ebenso verhindert werden, dass das Stützelement mit seinem Auflageabschnitt durch zum Beispiel infolge Vibrationen erzeugten Relativbewegungen gegenüber der Membranfeder in Umfangsrichtung sich eingräbt, also einen Materialabtrag auslöst. Auch kann auf diese Weise die Membranfeder am Stützelement drehfest gelagert werden, wobei das Stützelement selbst an zumindest einem Halteelement in Umfangsrichtung gehalten oder abgestützt ist. Hierbei kann auch vorgesehen sein, dass mehrere, zumindest aber drei Lagerbereiche über den Umfang verteilt zwischen Membranfeder und Stützfeder vorgesehen sind, wodurch die Membranfeder dann nicht nur in Umfangsrichtung sondern auch radial gegenüber dem Stützelement gelagert ist. Hierzu kann beispielsweise an der topfartigen Ausgestaltung des Stützelementes eine oder mehrere Vertiefungen in Richtung Membranfeder weisend und eine oder mehrere entsprechende Erhebungen zum Eingriff mit diesen Vertiefungen an der Membranfeder vorgesehen sein.

Die Kraftverstärkung der Anpresskraft im eingekuppelten Zustand durch die Federkraft des Stützelementes lässt sich besonders verlustarm übertragen, wenn jeweils ein Fortsatz mit seinem Abstützbereich an einer Betätigungszunge aufliegt.

Eine gleichmäßige Kraftverteilung auf die Membranfeder wird erzielt, wenn zumindest zwei Fortsätze über den Umfang verteilt sind. Hierbei ist es besonders vorteilhaft, wenn die Fortsätze gleichmäßig über der Umfang verteilt sind. Dies ist insbesondere von Vorteil, wenn mehr als zwei Fortsätze vorhanden sind. Besonders vorteilhaft wird die Ausführung, wenn die Fortsätze über den Umfang derart verteilt sind, dass der durch die Summe der Fortsätze erzeugte Kraftvektor zumindest annähernd parallel zur Drehachse der Reibungskupplung verläuft. Dies ist insbesondere bei ungleichmäßiger Verteilung der Fortsätze über den Umfang und / oder ungleichmäßiger Verteilung hinsichtlich deren Abstützkraft an den Betätigungszungen von Vorteil.

Zumindest in der Ausführungsform, in der mindestens drei Fortsätze über den Umfang verteilt sind kann es vorteilhaft sein, wenn zumindest zwei benachbarte Fortsätze ungleichmäßig beabstandet sind von mindestens einem weiteren Fortsatz des Stützelementes. Dies gilt insbesondere auch dann, wenn eine Mehrzahl von Fortsätzen vorhanden ist. So kann es sich beispielsweise ausbilden, dass 6 Fortsätze über den Umfang derart verteilt sind, dass jeweils zwei Fortsätze auf zwei benachbarten Betätigungszungen einwirken wobei die jeweils drei Paare Fortsätze annähernd gleich zueinander beabstandet sind.

Eine weitere erfindungsgemäße Ausgestaltung sieht vor, dass das Stützelement drehfest mit der Membranfeder verbunden ist.

Zusammenbau und Fertigung des Stützelementes gestallten sich besonders kostengünstig, wenn das Stützelement samt den Fortsätzen aus einem Blechteil ausgestanzt wird.

Hinsichtlich den Platzverhältnissen und der Ausbildung der Kraft-Weg-Kurve der Fortsätze hat es sich als vorteilhaft herausgestellt, wenn das radial innenliegende Ende der Fortsätze auf einem Radius zwischen 40 % und 65 % des Außenradius des Stützelementes liegt. Hinsichtlich der Gleitbewegung der Fortsätze auf den Betätigungszungen ist vorgesehen, wenn das radial innenliegende Ende der Fortsätze eine Abflachung oder Verrundung aufweist, die der Gleitbewegung während eines Kuppel-vorganges an den Betätigungszungen angepasst ist.

Um die Abstützung der Fortsätze verlustfrei zu gestalten, wird vorgeschlagen, dass zumindest teilweise Betätigungszungen der Membranfeder in Radialrichtung verlaufende Versteifungssicken aufweisen. Diese Versteifungssicken sind insbesondere bei den Betätigungszungen vorgesehen, welche durch Fortsätze Kraftbeaufschlagt werden. Es kann jedoch auch vorgesehen sein, dass jene Betätigungszungen mit Versteifungssicken versehen werden, welche Ausnehmungen zum Durchgriff von Halteelemente aufweisen.
In weiterer erfindungsgemäßer Ausgestaltung wird vorgesehen, dass zumindest eine Versteifungssicke sich über den Erstreckungsbereich der Betätigungszunge hinaus nach radial außen erstreckt. Es kann daher vorgesehen sein, dass die Versteifungssicken an den jeweiligen Betätigungszungen unterschiedlich ausgebildet sind und oder an einer Betätigungszunge mehrere Versteifungssicken ausgebildet sind. Zumindest eine oder ein Teil der Betätigungszungen können hierbei über die Betätigungszunge hinaus bis in den Tellerfederbereich eine Sicke aufweisen, insbesondere dann, wenn auch der Übergangsbereich zwischen der Betätigungszunge und dem Tellerfederbereich der Membranfeder besonders steif ausfallen soll.

Zur Vermeidung von Spannungsspitzen oder Rissbildung ist vorgesehen, dass die Betätigungszungen in ihren in den Tellerfederbereich der Membranfeder einmündenden Endbereichen Rundungen aufweisen.

Um das Rotationsträgheitsmoment der Reibungskupplung niedrig zu halten werden die Halteelemente radial beabstandet zum Abstützbereich. Werden diese Halteelemente radial innerhalb des Abstützbereiches der Membranfeder an der am Gehäuse vorgesehenen Auflage und dem Auflageabschnitt am Stützelement, wird auch der axiale Bauraum in diesem Abschnitt besser ausgenutzt.

Um die Lage und / oder Schrägstellung der Membranfeder im Gehäuse zumindest über einen Teilbereich der Lebensdauer der Reibbeläge zumindest annähernd konstant zu halten wird vorgeschlagen, dass die Reibungskupplung eine Vorrichtung zum automatischen Verschleißausgleich des Verschleißes der Reibbeläge aufweist. Diese Verschleißnachstellung kann dabei zwischen Membranfeder und Anpressplatte oder aber auch zwischen Membranfeder und Kupplungsgehäuse vorgesehen sein und dort wirken.

Eine weitere Fortbildung der Erfindung sieht vor, dass die Anlage der Membranfeder am Gehäuse steif ausgeführt ist. Dies wird auf einfache Weise dadurch erreicht, dass die Membranfeder im Abstützbereich direkt an einer dort am Gehäuse ausgebildeten Kante oder einem Vorsprung anliegt und keine elastischen Elemente wie gewellte Drahtringe dazwischen eingebracht sind.

Auch ist es in weiterer Ausgestaltung der Erfindung besonders vorteilhaft, wenn das Stützelement mit seinem topfartigen Bereich einen ersten Federbereich darstellt, welcher durch Abstützung am Halteelement und an der Membranfeder diese federvorgespannt abstützt und hält und die Fortsätze derart ausgebildet sind, dass diese eine die Anpresskraft erhöhende Federkraft auf die Betätigungszungen ausüben. Hierbei ist der erste Federbereich besonders steif ausgebildet, welcher die Membranfeder mit einer Kraft abstützt, die höher als die beim Auskuppeln erzeugte Kraft am Auflageabschnitt ist. Damit wird die Membranfeder ohne Spiel oder Toleranzen am Gehäuse gehalten und der Weg der Betätigungszungen am Ausrücker wird direkt nahezu ohne Verlust durch Bauteilverformung oder Elastizitäten auf die Anpressplattenbewegung während eines Kuppelvorganges übertragen. Die Fortsätze können auch als besonders steife zungenartige Federelemente ausgebildet werden, deren Federkraft hauptsächlich erzeugt oder zumindest verstärkt wird durch eine elastische Verformung des Stützelementes im Bereich zwischen zwei benachbarten Fortsätzen oder Halteelementen. Hierbei weisen die Fortsätze zumindest im Übergangsbereich des in Umfangsrichtung sich erstreckenden Körpers des Stützelementes eine ausreichende, die während eines Kuppelvorganges übliche Verschwenkung der Betätigungszungen erlaubende Elastizität auf. Diese Elastizität erzeugt hierbei die gewünschte Kraft-Wegekurve des Stützelementes auf die Betätigungszungen.

In alternativer Ausgestaltung der Erfindung kann vorgesehen sein, dass das Stützelement mit seinem topfartigen Bereich einen ersten, nahezu steifen Bereich darstellt, welcher durch Abstützung am Halteelement und an der Membranfeder diese abstützt mit einer nur unwesentlichen Kraft am Auflageabschnitt im eingekuppelten Zustand und die bei einer Betätigung der Reibungskupplung erzeugte Kraft sich hier abstützt wobei hier eine geringe oder nahezu vernachlässigbare Auslenkung oder Verformung des Stützelementes erfolgt und die Fortsätze derart ausgebildet sind, dass diese eine die Anpresskraft erhöhende Federkraft auf die Betätigungszungen ausüben. Hierbei ist der erste Bereich besonders steif ausgebildet, welcher die Membranfeder mit einer Kraft abstützt, die geringer als die beim Auskuppeln erzeugte Kraft am Auflageabschnitt ist. Erst beim Auskuppeln wird hier eine Gegenkraft durch die Betätigungszungen erzeugt. Damit wird die Membranfeder ohne Spiel oder Toleranzen sanft am Gehäuse gehalten und der Weg der Betätigungszungen am Ausrücker wird direkt nahezu ohne Verlust durch Bauteilverformung oder Elastizitäten auf die Anpressplattenbewegung während eines Kuppelvorganges übertragen. Die Fortsätze können auch als besonders steife zungenartige Federelemente ausgebildet werden, deren Federkraft hauptsächlich erzeugt oder zumindest verstärkt wird durch eine elastische Verformung des Stützelementes im Bereich zwischen zwei benachbarten Fortsätzen oder Halteelementen. Hierbei weisen die Fortsätze zumindest im Übergangsbereich des in Umfangsrichtung sich erstreckenden Körpers des Stützelementes eine ausreichende, die während eines Kuppelvorganges übliche Verschwenkung der Betätigungszungen erlaubende Elastizität auf. Diese Elastizität erzeugt hierbei die gewünschte Kraft-Wegekurve des Stützelementes auf die Betätigungszungen.

Eine weitere erfindungsgemäße Ausgestaltung sieht vor, dass die Fortsätze im eingekuppelten Zustand eine geringe Abstützkraft und im ausgekuppelten Zustand eine größere Abstützkraft auf die Betätigungszungen ausüben. Eine solche Ausführung kann insbesondere zur Vermeidung von hoher Flächenpressung zwischen den Fortsätzen und deren Auflage an der Membranfeder von Vortweil sein. Auch werden in dieser Variante die Fortsätze außerhalb des Kuppelvorganges weniger belastet. Hierbei kann insbesondere vorgesehen sein, dass die Fortsätze im eingekuppelten Zustand eine gegen Null gehende Abstützkraft aufweisen.

In weiterer erfindungsgemäßer Ausgestaltung ist vorgesehen, dass das Schwungrad durch ein Zweimassenschwungrad gebildet wird. Die Erfindung läßt sich besonders in Kombination mit einem Zweimassenschwungrad vorteilhaft realisieren, da die Abstützkräfte an der Membranfederzunge beim Betätigen der Reibungskupplung vorteilhaft beeinflusst werden. Durch die positive Wirkung auf die Einkuppelkraft und damit des Betätigungskraftverlaufes wird die Lagerstelle zur Abstützung der Axialkraft geringer belastet. Die Vermeidung von Durchbiegungsverlusten an der Membranfeder erlaubt die bessere Ausnutzung der Absenkung der maximalen Auskuppelkraft an den Betätigungszungen, da hier die ünterstützende Wirkung der Belagfederung zwischen den Kupplungsreibbelägen besser zur Wirkung kommt.

Weiterhin ist erfindungsgemäß vorgesehen, dass an den Betätigungszungen eine Ausrückeinheit, inbesondere eine automatisierte Kupplungsbetätigung angreift.

Mit dem Erfindungsvorschlag steht eine Möglichkeit zur Verfügung, die Federkennlinie der Ausrückkraft über dem Ausrückweg in gewünschter Weise anzupassen und dies durch eine minimale Anzahl an Bauteilen zu bewerkstelligen. Das Stützelement bewirkt gleichzeitig die axiale Fixierung der Membranfeder und die Erzeugung einer gewünschten Feder-Zusatzkraft.

In der Zeichnung ist ein Ausführungsbeispiel der Erfindung dargestellt. Es zeigen:
- Fig. 1: den teilweisen Radialschnitt durch eine Kraftfahrzeugkupplungseinrichtung,
- Fig. 2: eine Ausführungsform des erfindungsgemäßen Stützrings in perspektivischer Darstellung,
- Fig.3: einen Ausschnitt aus Fig. 1 im eingerückten Zustand der Kupplungseinrichtung und
- Fig. 4: die zu Fig. 3 entsprechende Darstellung im ausgerückten Zustand der Kupplungsvorrichtung.
- Fig. 5: perspekt. Ansicht einer Membranfeder zur erfindungsgemäßen Verwendung
- Fig. 6: den teilweisen Radialschnitt durch eine weitere erfindungsgemäße Kraftfahrzeugkupplungseinrichtung

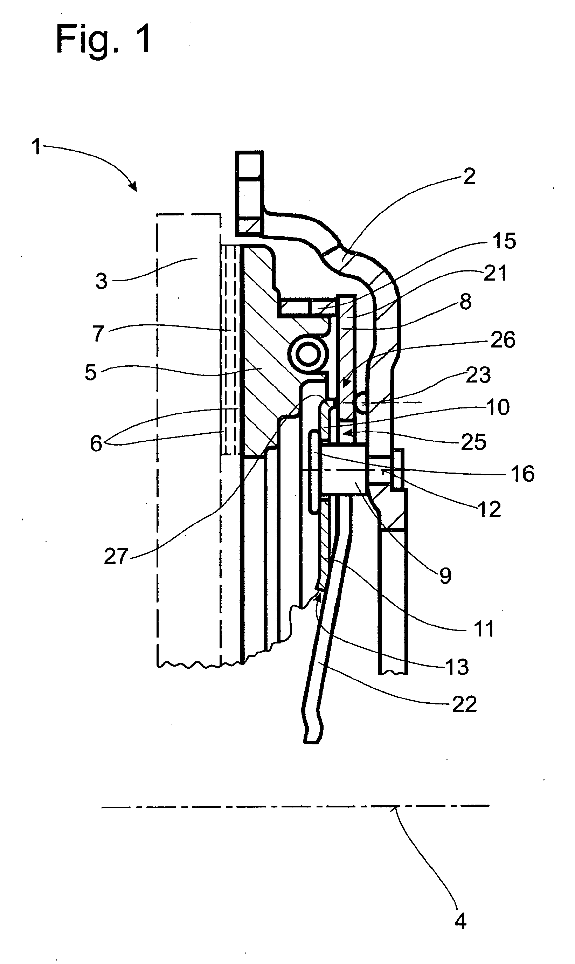

In Fig. 1 ist eine Reibungskupplung 1 zu sehen, die in üblicher Weise aufgebaut ist. Ein Gehäuse 2 ist mit einem Schwungrad 3 (gestrichelt dargestellt) einer Brennkraftmaschine drehfest verbunden, wobei das Gehäuse 2 um eine gemeinsame Drehachse 4 rotieren kann. Alternativ kann als Schwungrad 3 auch ein Zweimassenschwungrad vorgesehen sein, wie beispielhaft in der DE 139 39 030 A1 oder der DE 198 20 503 A1 gezeigt. In dem Gehäuse 2 ist eine Anpressplatte 5 drehfest jedoch axial verlagerbar angeordnet, welche in dem hier gezeigten Ausführungsbeispiel eine Verschleißausgleichsvorrichtung 15 aufweist. Zwischen der Anpressplatte 5 und dem Schwungrad 3 ist eine Kupplungsscheibe 7 (nicht dargestellt) mit dem Reibbelag 6 angeordnet. Hierbei weist der oder die Reibbeläge 6 Reibflächen 6 auf, welche mit entsprechenden Gegenreibflächen am Schwungrad 3 und der Anpressplatte 5 zur Drehmomentübertragung im eingekuppelten Zustand zusammenwirken. Zwischen der Anpressplatte 5 und dem Kupplungsgehäuse 2 ist eine Membranfeder 8 angeordnet, welche um einen Abstützbereich 23 verkippbar am Gehäuse gelagert ist und hierbei die Anpressplatte 5 axial in Richtung Schwungrad 3 drückt, um den Reibbelag 6 zur Übertragung des Drehmomentes einzuklemmen. Die Membranfeder 8 setzt sich zusammen aus einem Tellerfederabschnitt 21, welcher im wesentlichen eine kreisrunde Form aufweist, und so genannten Betätigungszungen 22, die sich ausgehend vom Tellerfederabschnitt 21 nach radial innen erstrecken und die Membranfeder 8 um ihren Abstützbereich 23 während eines Kupplungsvorganges verschwenken. An den Betätigungszungen greift eine hier nicht dargestellte Ausrückeinheit, inbesondere eine automatisierte Kupplungsbetätigung an. Auf der der Anpressplatte 5 zugewandten Seite der Membranfeder 8 wird diese durch ein Stützelement 10 gegenüber dem Gehäuse 2 gehalten. Das Stützelement 10 wiederum wird durch Halteelemente 9 am Gehäuse 2 abgestützt und positioniert. Hierbei durchgreifen diese Halteelemente 9 die Membranfeder 8 im Bereich der Betätigungszungen 22 an Durchgriffsbereichen 25. Die Halteelemente 9 sind hierbei derart ausgebildet, dass ein Stützelement 10 sich einerseits an den Halteelementen 9 und andererseits mit seinem Auflageabschnitt 27 an der Membranfeder 8 abstützt. Hierdurch wird die Membranfeder 8 zwischen dem Abstützbereich 23 und dem Auflageabschnitt 27 axial fest gelagert, kann aber während eines Kupplungsvorganges um diese Lagerstelle verschwenkt werden, womit eine Axialbewegung der Anpressplatte 5 einhergeht. Das Stützelement 10 weist nach radial innen sich erstreckende Fortsätze 11 auf, die im eingekuppelten Zustand unter einer Vorspannung mit ihrem Endbereich 13 an den Betätigungszungen 22 der Membranfeder 8 anliegen. Bei der in Fig. 1 gezeigten Ausführungsform sind die Halteelemente 9 durch Distanzbolzen gebildet, welche in Art eines Stufennietes mit einem in Form eines Nietkopfes ausgebildeten Halterungsbereich 16 das Stützelement 10 halten und wobei der zylindrische Körper des Stufennietes bei diesem Halteelement 9 eine axiale Anlage am Gehäuse 2 aufweist und dieses in einer Bohrung durchsetzt und auf der Gegenseite des Gehäuses durch eine entsprechende Stauchung des Vernietungsabschnitts fest mit diesem verbunden ist. Das Vorsehen eines Distanzbolzens als Halteelement 9 erlaubt eine rationalisierte und maschinelle Herstellung der Reibungskupplung. Alternativ kann auch vorgesehen sein, dass der Distanzbolzen mit dem Gehäuse direkt verschweißt wird.

Die Funktion der hier in Fig. 1 dargestellten Reibungskupplung in erfindungsgemäßer Hinsicht ist nun folgende:

Im eingekuppelten Zustand befindet sich die Membranfeder 8 in ihrer Grundstellung und der Tellerfederabschnitt 21 stützt sich radial außen an seiner Auflagestelle an der Anpressplatte 5 und radial innen am Abstützbereich 13 des Gehäuses 2 ab. Hierbei wird die Anpressplatte 5 fest gegen die Reibflächen des oder der Reibbeläge 6 und gegen das Schwungrad 3 in Axialrichtung gedrückt, womit die Reibbeläge 6 das Drehmoment in die Kupplungsscheibe 7 und somit weiter ins Getriebe übertragen können. Bei der in Fig. 1 gezeigten Ausführungsform wird vermittels der hier an der Anpressplatte ausgebildeten Verschleißausgleichsvorrichtung 15 dieses direkt durch den Tellerfederabschnitt 21 der Membranfeder 8 kraftbeaufschlagt und leitet die Anpresskraft in die Anpressplatte 5. Alternativ kann der am Gehäuse 2 ausgebildete Abstützbereich 23 auch indirekt durch einen Drahtring oder irgendein Zwischenelement ausgebildet sein. Die Halteelemente 9 durchgreifen die Membranfeder 8 radial innerhalb des Tellerfederabschnitts 21 zwischen den Betätigungszungen 22, welche zum Durchgriff der Halteelemente 9 eine entsprechende Ausnehmung in diesem Bereich aufweisen können. Die Halteelemente 9 sind vorzugsweise gleichmäßig über den Umfang der Membranfeder 8 verteilt um eine gleichmäßige Kraftverteilung und Befestigung der Membranfeder 8 zu ermöglichen. Auf der der Anpressplatte 5 zugewandten Seite der Membranfeder 8 wird diese durch das Stützelement 10 in Axialrichtung am Gehäuse gehalten. Dieses ringartig ausgebildete Stützelement 10 umgreift entsprechende Halterungsbereiche 16 am Halteelement 9 um dieses in Axialrichtung abzustützen. Hierbei kann erfindungsgemäß vorgesehen sein, dass das Stützelement 10 derart federvorgespannt mit seinem Auflageabschnitt 27 an der Membranfeder 8 anliegt, dass die Membranfeder 8 um den Auflagebereich 26, welcher den Auflageabschnitt 27 und den Abstützbereich 23 umfasst, drehbar bzw. verkippbar gelagert ist, jedoch kein Spiel bzw. keine Lagerluft vorhanden ist. Die Vorspannung, mit welcher das Stützelement 10 an der Membranfeder 8 anliegt ist vorteilhafterweise so bemessen, dass auch bei einer Änderung der Kraft mit welcher die Membranfeder 8 auf die Anpressplatte 5 drückt kein Spiel bzw. keine Luft sich bildet. Das kann insbesondere dann der Fall sein, wenn infolge Reibbelagverschleißes die Einbaulage der Membranfeder 8 sich ändert. Auch bei Vorsehen einer Verschleißausgleichsvorrichtung 15 kann diese derart ausgeführt sein, dass nicht bei jedem Auftreten von Reibbelagverschleiß unmittelbar anschließend eine Nachstellung des vorhandenen oder erfassten Reibbelagverschleißes erfolgt, sondern vielmehr erst nach Überschreiten eines bestimmten Grenzwertes ein Ausgleich und damit eine Wiederherstellung der ursprünglichen Lage der Membranfeder 8 erfolgt. Auch ist es denkbar, dass die vorgenannte Erfindung in Reibungskupplungen zum Einsatz kommt, bei welchen über ein erstes Reibbelagverschleißvolumen eine Verschleißnachstellung durch die Verschleißausgleichsvorrichtung 15 erfolgt und anschließend über ein zweites Reibbelagverschleißvolumen die Nachstellkapazität der Verschleißausgleichsvorrichtung 15 erschöpft ist und somit die Reibungskupplung weiterbetrieben wird wie eine Reibungskupplung ohne Verschleißausgleichsvorrichtung 15 und demnach sich die Membranfeder 8 mit zunehmendem Reibbelagverschleiß ihre Lage im eingekuppelten Zustand verändert. Radial innerhalb des Stützelementes 10 sind erfindungsgemäß Fortsätze 11 ausgebildet, welche mit einem Endbereich 13 jeweils an zugeordneten Betätigungszungen 22 der Membranfeder 8 anliegen, um im eingekuppelten Zustand eine auf die Betätigungszungen 22 zu gerichtete Kraft auszuüben. Diese durch die Fortsätze 11 erzeugte Kraft wirkt anpresskrafterhöhend im eingekuppelten Zustand. Besonders vorteilhaft ist der Kraftverlauf der durch die Fortsätze 11 erzeugten Kraft dahingehend ausgebildet, dass diese im eingekuppelten Zustand ihr Kraftmaximum über den Betätigungsweg während eines Auskuppelvorganges aufweist. Dies insbesondere im Fall des Vorsehens einer Verschleißausgleichsvorrichtung 15. Bei einer Verschwenkung der Betätigungszungen 22 in Reibungskupplungsrichtung auf die Anpressplatte 5 folgt diese der sich von ihr weisenden Bewegung des Tellerfederabschnittes 21 aufgrund der zwischen den Reibbelägen 6 üblicherweise vorgesehenen Belagfederpaketen und deren in Richtung des Gehäuses weisenden Ausrückkraft der Tangentialblattfeder zur Befestigung der Anpressplatte 5 am Gehäuse 2. Die durch die Belagfederpakete der Reibbeläge 6 erzeugte Abstützkraft zwischen der Anpressplatte 5 und dem Schwungrad 3 wirkt hierbei derart, dass die Betätigungskraft an den Betätigungszungen 22 entsprechend der Hebelübersetzung der Membranfeder 8 reduziert wird. Somit besteht idealer Weise im eingekuppelten Zustand ein Kräftegleichgewicht zwischen der zwischen den Reibbelägen 6 eingebrachten Belagfederpakete und der durch die Membranfeder 8 und den Fortsätzen 11 aufgebrachten Anpresskraft. Mit Beginn der Auskuppelbewegung drückt sich die Membranfeder 8 am Auflageabschnitt 27 des Stützelementes 10 ab und verkippt um diesen. Hierbei werden die Fortsätze 11 ebenso elastisch verformt in Richtung auf die Anpressplatte 5 zu. Da die Kraft-Weg-Kurve der Fortsätze 11 ähnlich der einer Membranfeder oder Tellerfeder, welche im Übertotpunkt betrieben wird, gleicht sinken die auf die Betätigungszungen 22 ausgeübten Kräfte der Fortsätze 11. Idealerweise ist das Minimum der Abstützkraft der Fortsätze 11 auf die Betätigungszungen 22 dann erreicht, wenn die Anpressplatte 5 gerade von ihrer Anlage an den Reibbelägen 6 abgehoben hat und somit die Drehmomentübertragung beendet ist. Wird nun weiter die Membranfeder in Richtung auf die Anpressplatte 5 verschwenkt, kann vorgesehen sein, dass allmählich die auf die Betätigungszungen 22 ausgeübte Kraft der Fortsätze 11 ansteigt und somit eine Maßnahme gegen allzu weites Durchdrücken der Betätigungszungen bei einem Kupplungsausrückvorgang entgegenwirkt. Insbesondere kann vorgesehen sein, dass nach einem vorbestimmten Auskuppelweg die Kraft-Wege-Kurve der Fortsätze 11 derart steil ansteigt, dass es zu einem deutlichen Anstieg der Auskuppelkraft kommt und somit ein Überschwenken der Membranfeder 8 verhindert wird. Da insbesondere für die Fälle, wenn keine Verschleißausgleichsvorrichtung 15 vorgesehen ist, oder deren Verstellbereich bereits überschritten wurde, die Abstimmung der Kraft-Wege-Kurve der Fortsätze 11 auf die Kräfteverhältnisse beim Ein- und Auskuppeln der Reibungskupplung 1 schwierig ist, kann vorgesehen sein, dass ab diesem Zeitpunkt, wenn im eingekuppelten Zustand die Lage der Membranfeder 8 in Folge Reibbelagverschleißes sich verändert, die Abstützkraft der Fortsätz1 weiter ansteigt und somit die Übertragungssicherheit der Reibungskupplung 1 weiter erhöht. Hierbei wird sich aber auch bereits im Beginn der Auskuppelbewegung ein Anstieg der Kuppelkraft bemerkbar machen, womit ab einem bestimmten Reibbelagverschleiß dadurch eine Rückmeldung an das Kupplungspedal erfolgt. Alternativ kann aber auch vorgesehen sein, dass bei einer Verlagerung der Einbaulage der Membranfeder im eingekuppelten Zustand infolge Reibbelagverschleiß oder Setzverhaltens, welcher nicht durch eine Verschleißausgleichsvorrichtung ausgeglichen wird, die durch die Fortsätze 11 auf die Betätigungszungen 22 ausgeübte Kraft nahezu auf ein Maximum zustrebt und mit Fortschreiten der Verkippung der Membranfeder 8 im eingekuppelten Zustand, also mit Fortschreiten des Reibbelagverschleißes, diese Kraft der Fortsätze 11 allmählich abfällt. Dies ist insbesondere dann von Vorteil, wenn eine gleich bleibende Anpresskraft durch die Anpressplatte 5 übertragen werden soll und die Membranfeder 8 derart ausgelegt ist, dass bei dem vorab beschriebenen Fall der Verkippung der Membranfeder 8 im eingekuppelten Zustand die durch deren Tellerfederabschnitt 21 erzeugte Anpresskraft selbst ansteigt. Somit kann insbesondere der Einsatzbereich einer Reibungskupplung 1 mit Verschleißausgleichsvorrichtung 15, welche über den durch die Verschleißausgleichsvorrichtung 15 ausgleichbaren Reibbelagverschleiß hinaus betrieben wird, deutlich verlängert werden. Hierzu müssen nur die Reibbeläge entsprechend vorgesehenes Verschleißvolumen aufweisen. Des weiteren wird aus der Fig. 1 ersichtlich, dass die Endbereiche 13 der Fortsätze 11 eine entsprechende Ausrundung bzw. Abflachung aufweisen, um während einer Betätigung und der dabei erfolgenden Gleitbewegung zwischen den Betätigungszungen 22 und den Fortsätzen 11 keine oder nur geringe Reibkraft zu erzeugen. Idealerweise ist die Ausgestaltung der Fortsätze 11 derart vorgesehen, dass hier eine möglichst geringe Gleitbewegung stattfindet.

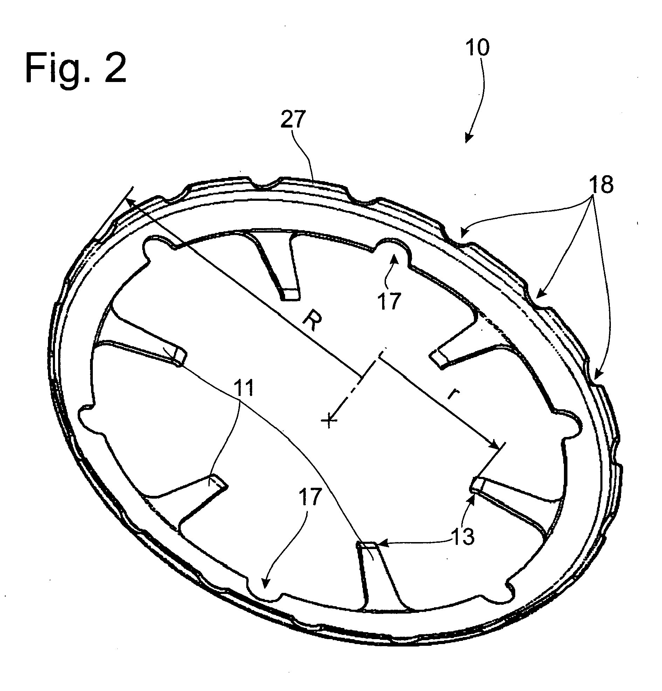

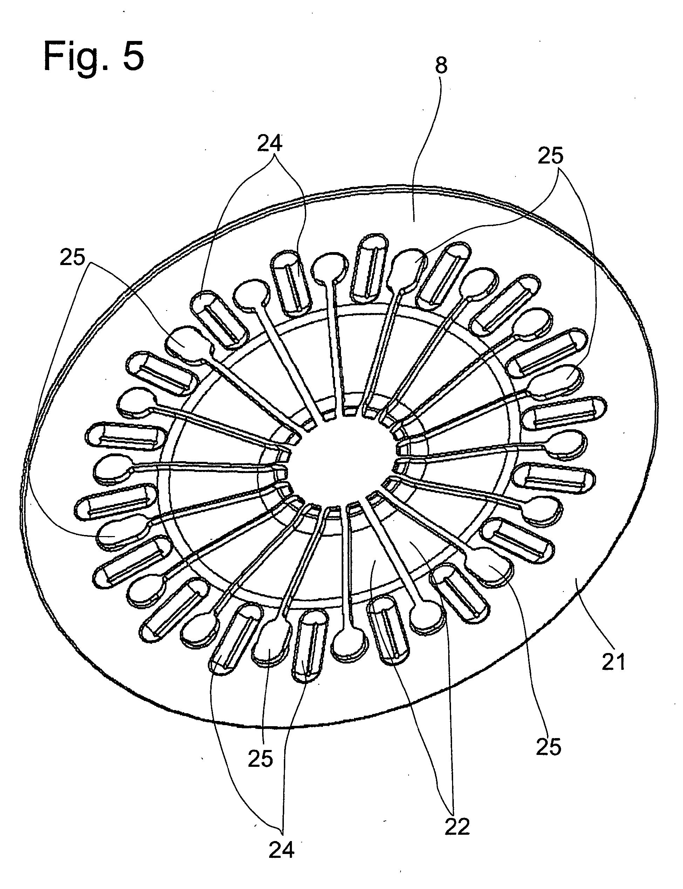

Die in Fig. 2 gezeigte Darstellung zeigt, dass erfindungsgemäße Stützelement 10 mit seinen nach radial innen weisenden Fortsätzen 11, welche hier in dem gezeigten Beispiel gleichmäßig über den Umfang verteilt sind und mittig zwischen am Gehäuse 2 ausgebildeten Halteelementen 9 im eingebauten Zustand platziert sind. Das hier aus Richtung der Membranfeder 8 gezeigte Stützelement 10 weist in seinem radial äußersten Durchmesser R den daran ausgebildeten Auflageabschnitt 27 zur Anlage an der Membranfeder 8 auf, von dem aus das Stützelement 10 sich topfartig in Richtung der Halteelemente 9 fortbildet. Bei der hier gezeigten Ausführungsform des Stützelementes 10 ist der Auflageabschnitt 27 dem Konturverlauf an der entsprechenden Anlagefläche an der Membranfeder 8 angepasst. Die entsprechende Membranfeder 8 ist hier exemplarisch in Fig. 5 dargestellt. Hierbei hat der Konturverlauf im Auflageabschnitt 27 gleichmäßig über den Umfang verteilte Eingriffsabschnitte 17, indem entsprechende Versteifungssicken 24 der Membranfeder 8 eingreifen. Auf diese Art wird bei der Anlage des Stützelementes 10 an der Membranfeder 8 ein entsprechender Formschluss erzielt, welcher die beiden Teile in Umfangsrichtung formschlüssig miteinander verbindet und ebenso geeignet ist, in Radialrichtung die Membranfeder 8 und das Stützelement 10 exakt gegeneinander zu positionieren. Weiterhin ist der radial innen liegende Konturverlauf des topfartigen Grundkörpers des Stützelementes 10 durch Eingriffsabschnitte 17 zum Zusammenwirken mit Halteelementen 9 ausgebildet. Diese Eingriffsabschnitte 17 sind bei der hier gezeigten Ausführungsform mittig zwischen den Fortsätzen vorgesehen und entsprechen der Außenform der Halteelemente 9, welche bei der hier gezeigten Reibungskupplung 1 als runde Distanzbolzen eingebracht sind. Die hier gezeigten Fortsätze 11 sind ebenfalls gleichmäßig über den Umfang verteilt und reichen nach radial innen bis zum Radius r, wobei der Endbereich 13 der Fortsätze 11 hier eine Abrundung bzw. Abflachung aufweist zur Anlage an den Betätigungszungen 22 der Membranfeder 8, wobei diese Abflachung dem Bewegungsverlauf während eines Kupplungsvorganges angepasst ist. Über die zwischen den Fortsätzen 11 eingebrachten Eingriffsabschnitte 17 zum Zusammenwirken mit den Halteelementen 9 wird das Stützelement 10 drehfest und in Radialrichtung gegenüber dem Gehäuse 2 gesichert und stützt sich entsprechend an den Halterungsbereichen 16 der Halteelemente 9 in Axialrichtung ab. Auf diese Weise kann indirekt über das Stützelement 10 die Membranfeder 8 gegenüber dem Gehäuse 2 in Radialrichtung und/oder Umfangsrichtung abgestützt sein. Hierbei kann vorgesehen sein, dass das Stützelement 10 nur unterstützend zur Sicherung der Membranfeder 8 in Umfangsrichtung und/oder Radialrichtung gegenüber dem Gehäuse 2 sichernd wirkt. Es kann jedoch auch alternativ vorgesehen sein, dass die formschlüssige Verbindung, insbesondere vermittels den Versteifungssicken 24 und dem angepassten Konturverlauf des Stützelementes 10 im Bereich seines Auflageabschnitts 27 zwischen der Membranfeder 8 und dem Stützelement 10 dahingehend ausgelegt ist, dass das Stützelement 10 durch die Membranfeder 8 in Umfangsrichtung gehalten wird, wobei die Membranfeder 8 sich über die Halteelemente 9 gegenüber dem Gehäuse 2 positioniert. Eine solche Ausgestaltung ist insbesondere für eine kostengünstige Fertigung von Vorteil, wobei hier vorteilhafterweise die vorgenannten Distanzbolzen als Halteelemente 9 mit dem Gehäuse 2 vernietet sind.

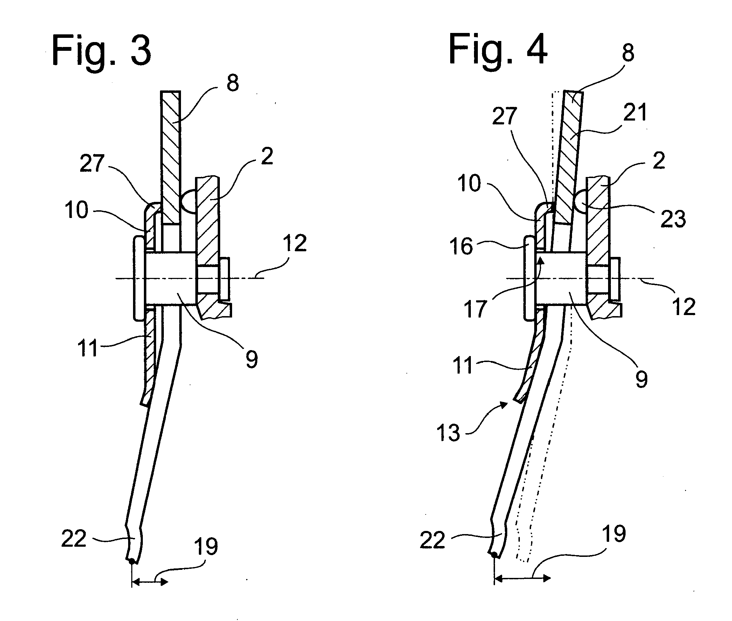

Bei den in Fig. 3 und 4 gezeigten Ausschnitten aus der erfindungsgemäßen Reibungskupplung gemäß Fig. 1 wird die Wirkungsweise eines erfindungsgemäßen Stützringes 10 während eines Kuppelvorganges erläutert.

In Fig. 3 ist die Reibungskupplung im eingekuppelten Zustand, wobei am Gehäuse 2 die als Distanzbolzen ausgeführten Halteelemente 9 auf einem Teilkreisdurchmesser 12 mit dem Gehäuse vernietet sind, welcher zwischen den Durchmessern r und R des Stützelementes 10 vorgesehen ist. Der Teilkreisdurchmesser 12 liegt innerhalb der radialen Erstreckung der Durchgriffsbereiche 25. Diese Halteelemente 9 durchgreifen die Betätigungszungen 22 der Membranfeder 8 an Durchgriffsbereichen 25 und zentrieren somit die Membranfeder 8 gegenüber dem Gehäuse 2. Auf der der Anpressplatte 5 zugewandten Seite der Membranfeder 8 liegt das Stützelement 10 mit seinem Auflageabschnitt 27 an der Membranfeder 8 an und bildet somit das Widerlager zur Aufnahme der Betätigungskraft während eines Kupplungsvorganges. Das Stützelement 10 selbst wird durch die Halteelemente 9 in Axialrichtung zur Weiterleitung der Abstützkraft der Membranfeder 8 in das Gehäuse 2 gehalten. Die sich nach radial innen erstreckenden Fortsätze 11 liegen mit ihren Endbereichen 13 an den Betätigungszungen 22 an und üben auf diese eine in Richtung der Anpressplatte 5 wegweisende Abstützkraft aus, welche eine Erhöhung der auf die Reibbeläge 6 einwirkenden Anpresskraft der Anpressplatte 5 zur Folge hat. Radial außerhalb der Halteelemente 9 ist am Gehäuse 2 ein Auflagebereich 26 ausgebildet, welcher im eingekuppelten Zustand die Abstützkraft der Membranfeder 8 aufnimmt. Idealerweise ist das Stützelement 10 durch die Halteelemente 9 gegenüber der Membranfeder 8 derart vorgespannt, dass hier eine spielfreie, keine Lagerluft aufweisende Anlage des Auflageabschnitts 27 und somit des Stützelementes 10 vorhanden ist. Somit wird die Membranfeder 8 im eingekuppelten Zustand spielfrei gehalten. Die durch die Fortsätze 11 ausgeübte Abstützkraft auf die Betätigungszungen 22 der Membranfeder 8 befinden sich idealerweise im eingekuppelten Zustand im Bereich ihres Maximums. Wird nun die Membranfeder 8 während eines Auskuppelvorganges um den Betätigungsweg 19 verschwenkt, verändert sich die Lage der Membranfeder 8 wie in Fig. 4 dargestellt. Hierbei verkippt diese um den Auflageabschnitt 27 des Stützelementes 10 und verformt die Fortsätze 11 entsprechend. Hierbei ist der Kraft-Wege-Verlauf der Fortsätze 11 derart ausgebildet, dass diese mit zunehmender Auslenkung bis kurz vor dem Erreichen ihres maximalen Betätigungsweges 19 eine abfallende Kennlinie also eine sinkende Abstützkraft auf die Betätigungszungen 22 aufweisen. Somit wird über den Auskuppelweg die Pedalkraft am Kupplungspedal nicht unnötigerweise erhöht. Idealerweise ist die Kraft-Wege-Kurve derart abgestimmt, dass zumindest bis zu dem Bereich ab dem die Anpressplatte 5 von den Reibbelägen 6 abhebt, die Kraft-Wege-Kurve der Fortsätze 11 eine abfallende Kennlinie aufweist. Mit Erreichen des Endes des Betätigungsweges 19 kann vorgesehen sein, dass die Fortsätze 11 eine ansteigende, insbesondere steil ansteigende Kennlinie aufweisen. Hiermit kann dem Fahrer durch die ansteigende Abstützkraft der Fortsätze 11 ein Ende des Betätigungsweges und insbesondere ein Überdrücken also zu weites Auslenken der Membranfeder 8 angezeigt werden. Eine solche Charakteristik ist insbesondere auch für automatisierte Kupplungsvorrichtungen vorteilhaft. Da hier durch den Kraftanstieg eine genaue Sensierung erfolgen kann. Bei der in Fig. 3 und 4 gezeigten Ausführungsform ist vorgesehen, dass der radial Durchmesser auf dem der Auflageabschnitt 27 des Stützelementes 10 angeordnet ist, radial weiter innen liegt als der am Gehäuse 2 ausgebildete Auflagebereich 26. Hiermit gestalten sich die Hebelverhältnisse an der Membranfeder 8 in Folge des veränderten Kipppunktes um den Auflageabschnitt 27 bzw. den Auflageabschnitt 26 während eines Auskuppelvorganges anders als im eingekuppelten Zustand, wenn die Membranfeder 8 sich am Auflagebereich 26 und an der Anpressplatte 5 abstützt. Insbesondere kann dadurch, dass der Auflagebereich 26 radial weiter außen als der Auflageabschnitt 27 angebracht ist, die kraftverstärkende Wirkung der Fortsätze 11 vergrößert werden, da deren Hebelbereich hiermit verlängert wird. Während eines Auskuppelvorganges wird durch die radial weiter innen liegende Positionierung des Auflageabschnitts 27 das Hebelverhältnis dahingehend verändert, dass der erforderliche Betätigungsweg 19 bis zum vollständigen Auskuppeln der Reibungskupplung 1 geringer ausfällt. Insbesondere aus der Darstellung der Lage der Membranfeder 8 im ausgekuppelten Zustand in Fig. 4 sowie der in Strichlinien dargestellten Lage der Membranfeder 8 im eingekuppelten Zustand erkennt man, dass die Membranfeder 8 ihren axialen Bauraum im Abstützbereich 23 zwischen dem Auflagebereich 26 und dem Auflageabschnitt 27 verändert. Durch die federnde Ausgestaltung des Stützelementes 10 im Bereich zwischen dem Auflageabschnitt 27 und seiner Anlage an den Halteelementen 9 kann hier ein Klemmen bzw. ein Festsetzen oder erhöhte Reibung während einer Betätigung vermieden werden. Hierbei unterscheidet sich die elastische also federnde Ausbildung des Stützelementes 10 im Bereich zwischen dem Auflageabschnitt 27 und dem Halteelement 9 von der Ausbildung der Kraft-Wege-Kurve der Fortsätze 11. Während im erstgenannten, radial außen liegenden Bereich des Stützelementes 10 ein möglichst steifes Bauteil mit einer sehr begrenzten Auslenkung während eines Auskuppelvorganges erwünscht ist, weisen die Fortsätze 11 einen im Gegensatz hierzu verhältnismäßig großen Federweg auf. Insbesondere ist der Federweg der Fortsätze 11 während einer Auslenkung kleiner werdend, wohingegen die Federkraft am Auflageabschnitt 27 des Stützelementes 10 tendenziell eher ansteigen soll.

Bei der in Fig. 5 gezeigten Membranfeder 8 sind über den Umfang radial innen gleichmäßig breite Membranfederzungen 22 verteilt, welche in ihrem in den Tellerfederbereich der Membranfeder 8 einmündenden Endbereich abgerundet sind, zur Vermeidung von Spannungsspitzen. Die zum Durchgriff der Halteelemente 9 vorgesehenen Durchgriffsbereiche 25 weisen eine entsprechende Vergrößerung auf, um den Halteelementen 9, insbesondere wenn diese hier als Distanzbolzen ausgebildet sind, genügend Raum zu bieten. Hierbei sind die jeweils links und rechts eines Durchgriffsbereichs 25 angeordneten Betätigungszungen in ihrer Steifheit reduziert. Daher weisen diese Versteifungssicken 27 auf, die die Verformung infolge der Auskuppelkraft während eines Kupplungsvorganges reduzieren. Diese Versteifungssicken 24 sind in Richtung der Anpressplatte 5 hervorstehend eingeprägt, wodurch das Stützelement 10 entsprechende Befestigungsabschnitte 18 im Auflageabschnitt 27 aufweist. Durch das vorsehen des Stützelementes 10 sowie der Versteifungssicken 27 an den Betätigungszungen 22 wird erreicht, dass bei der hier gezeigten Membranfeder 8 eine reduzierte Anzahl von Halteelementen 9 zur festen Verbindung der Membranfeder 8 am Gehäuse 2 ausreicht. Bei dem hier gezeigten Beispiel sind es sechs Halteelemente 9, welche in jeweilige Durchgriffsbereiche 25 eingreifen. Es kann hierbei vorgesehen sein, dass zwischen allen Betätigungszungen 22 in ihrem in den Tellerfederabschnitt 21 der Membranfeder 8 einmündenden Endbereich entsprechende Durchgriffsbereiche 25, insbesondere in ausreichender Größe, eingebracht sind, wobei jedoch nur eine reduzierte Anzahl dieser Durchgriffsbereiche 25 von Halteelementen 9 durchgriffen wird. Insbesondere kann es ausreichend sein, wenn die Durchgriffsbereiche 25 nur insoweit sich in Umfangsrichtung erstrecken als die Halteelemente 9 in ihrer räumlichen Ausdehnung dies erfordern. Hierbei kann die Zentrierung der Membranfeder 8 gegenüber dem Gehäuse 2 über die in Radialrichtung weisenden Flächenbereiche der Halteelemente 9 erfolgen, welche während eines Kuppelvorganges von den hierbei hinsichtlich Zentrierung mitwirkenden Durchgriffsbereichen 25 überstrichen werden. Weiterhin ist hier zur Vermeidung eines Durchbiegungsverlustes an den Betätigungszungen 22 während eines Auskuppelvorganges vorgesehen, dass jede Betätigungszungen 22 zumindest eine Versteifungssicke 24 aufweist. Die hier gezeigte Membranfeder 8 bildet diese Versteifungssicken 24 erfindungsgemäß bis in den Tellerfederbereich der Membranfeder 8 hinein. Die Versteifungssicken 24 ragen nach radial außen über den Erstreckungsbereich der Betätigungszungen 22 hinaus. Durch die erfindungsgemäße Ausgestaltung einer solchen Reibungskupplung 1 wird erzielt, dass eine begrenzte Anzahl von Halteelementen 9 in Verbindung mit einem Stützelement 10 ausreichend ist zur sicheren und verlustfreien Lagerung der Membranfeder 8 innerhalb des Gehäuses 2. Hierbei ist die Erfindung nicht beschränkt auf Ausführungsformen mit einer Verschleißausgleichsvorrichtung 15, sondern kann insbesondere auch bei entsprechender Ausbildung der Kraft-Wege-Kurve der Fortsätze 22 auf Reibungskupplungen angewandt werden, welche keine Verschleißausgleich aufweisen oder über den maximalen Verschleißnachstellweg einer Verschleißnachstellvorrichtung hinaus weiter im Einsatz sind. Hierbei wirken die Fortsätze 11 anpresskrafterhöhend und sorgen für eine gesteigerte Drehmomentübertragungsfähigkeit der Reibungskupplung.

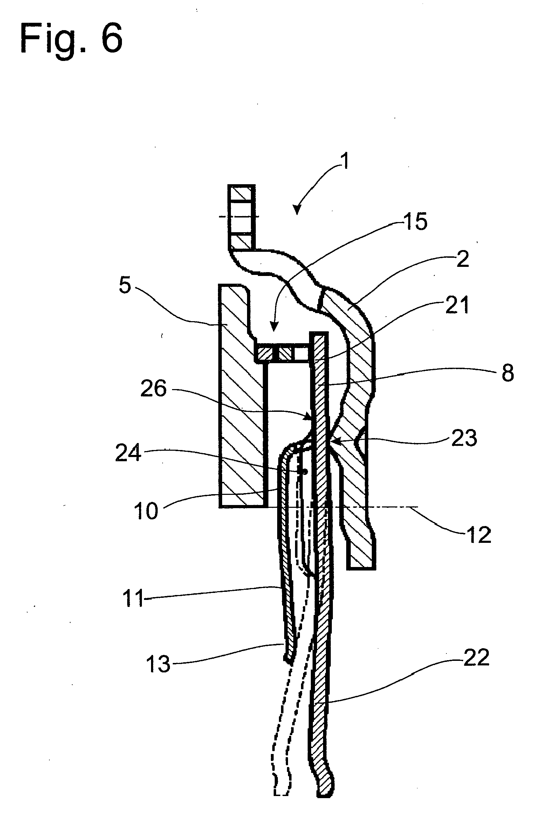

Bei der in Fig 6 gezeigten Ausführungsform ist eine Reibungskupplung vom Prinzip entsprechend der Fig 1 aufgebaut. Die entsprechend hierzu erfolgte Weiterbildung der Fig. 6 wird in Nachgang näher erleutert.

Die Membranfeder 8 entspricht im prinzipiellen Aufbau der in Figur 5 gezeigten Membranfeder 8, wobei diese der hier geänderten Einbaulage und der angepaßten Kraft-Wege-Kurve Rechnung trägt. Anpressplatenseitig sind in der Membranfeder, insbesondere in den Betätigungszungen 22 Versteifungssicken 24 eingeprägt, um die axiale Stefheit zu erhöhen. In dieser hier gezeigten Ausführungsform erstrecken sich die Versteifungssicken 24 zumindest teilweise bis in den Tellerfederabschnitt 21 hinein. Das heißt, dass zumindest ein Teil der ausgebildeten Versteifungssicken 24 entsprechend radial verlängert ist. Die in Figur 6 gezeigte Reibungskupplung 1 ist im eingekuppelten Zustand abgebildet, wobei die Membranfeder 8 mit ihren Betätigungszungen 22 keinen Kontakt zu den hier gestrichelt dargestellten Fortsätzen 11 des Stützelementes 10 aufweist. Das Stützelement 10 ist über im Bereich des Teilkreisdurchmessers 12 angebrachten, aber in dieser Schnittzeichnung nicht dargestellten, die Membranfeder 8 an Durchgriffsbereichen 25 durchsetzenden Halteelementen 9 gegenüber der Membranfeder 8 und dem Gehäuse 2 gelagert. Die Fortsätze 11 sind im eingekuppelten Zustand beabstandet zu den Betätigungszungen 22 der Membranfeder 8. Die Endbereiche 13 liegen nicht an den Betätigungszungen 22 auf. Am Gehäuse 2 ist gehäuseseitig zur Anlage der Membranfeder 8 im eingekuppelten Zustand ein Abstützbereich 23 ausgeformt. Anpressplattenseitig wird die Membranfeder insbesondere während eines Auskuppelvorganges durch den am Stützelement 10 ausgebildeten Auflageabschnitt 27 abgestützt. Um diesen durch den Auflagebereich 27 und dem Abstützbereich 23 gebildeten Auflagebereich 26 verschwenkt die Membranfeder 8 während eines Kuppelvorganges. Der Tellerfederabschnitt 21 der Membranfeder 8 stützt sich über die Verschleißausgleichsvorrichtung 15 an der Anpressplatte 5 und über den Abstützbereich 23 am Gehäuse 2 ab. Wird nun die Reibungskupplung 1 betätigt, so verlagert sich die Membranfeder 8 mit ihren Betätigungszungen 22 in Richtung auf die Anpressplatte 5 und nähern sich dem Fortsatz 11 beziehungsweise den Fortsätzen 11. Mit Fortschreiten der Auskuppelbewegung kommen die Betätigungszungen 22 der Membranfeder 8 an den Fortsätzen 11 zur Anlage. Die Endbereiche 13 beginnen sich an der Membranfeder 8 abzustützen. In der Fig 6 ist die Anlage der Endbereiche 13 der Fortsätze 11 des Stützelementes 10 an den Betätigungszungen 22 der Membranfeder 8 als gestrichelter Linienverlauf der Betätigungszungen 22 dargestellt. Mit weiter fortschreitender Auskuppelbewegung werden die Fortsätze 11 des Stützelementes 10 durch die Verschwenkbewegung der Membranfeder 8 elastisch in Richtung auf die Endlage der Auskuppelstellung der Membranfeder 8 ausgelenkt. Es findet eine elastische Verformung der Fortsätze statt. Obwohl in der hier gezeigten Ausführungsform nach Fig 6 vorgesehen ist, dass die Fortsätze 11 bei einem Auskuppelvorgang in elastischer Weise mit verformt werden, kann alternativ auch vorgesehen sein, dass die Fortsätze 11 als Begrenzung der Auskuppelbewegung derart Wirken, dass die Membranfeder 8 dort zur Anlage kommt und die Steifigkeit der Fortsätze 11 ausreichend hoch bemessen ist, dass hier die Auskuppelbewegung quasi beendet wird. Die Fortsätze 11 wirken dann in dieser Ausführungsform als sogenannter weicher Anschlag dahingehend, dass die Membranfeder 8 mit den Betätigungszungen 22 an diesen zur Anlage kommt und nach einer geringen Verformung der Kraftanstieg der Fortsätze 11 derart hoch ist, dass der Auskuppelbewegung eine ausreichend große Gegenkraft entgegen gesetzt wird, die einem Auftreffen auf einer Anschlagposition entspricht. Eine weitere Verformung der Fortsätze 11 durch die Verschwenkbewegung der Membranfeder 8 könnte nur unter hohem Kraftaufwand seitens dem Betätigungssystem erolgen. Auf diese Art kann nicht nur der Betätigung der Kupplung vermittels einem Kupplungspedal sondern auch einem automatisierten Kupplungsbetätigungssystem eine Endanschlagposition der Auskuppelbewegung vermittelt werden. Hierzu könnte beispielsweise das automatisierte Kupplungsbetätigungssystem über eine Drucküberwachung im hydraulischen Übertragungsweg oder im Falle eines Elektromotors über eine Leistungsüberwachung der Energieaufnahme des Elektromotors verfügen. Auch ein Messen der Kraft kann vorgesehen sein.
Es ist hier aber vorgesehen, dass erst mit zunehmender Verformung der Fortsätze 11 eine allmählich steigende Gegenkraft der Fortsätze 11 auf die Membranfeder 8 ausgeübt wird. Hierzu üben diese über ihre Anlage an den Betätigungszungen 22 in ihren Endbereichen 13 eine entsprechende Abstützkraft in Richtung Einkuppelstellung der Membranfeder 8 aus. Nach Beginn der Abstützung der Fortsätze 13 an den Membranfederzungen 22 der Membranfeder 8 ist erfindungsgemäß vorgesehen, dass diese der Auskuppelbewegung der Membranfeder 8 mit einer Gegenkraft entgegen wirken, die die Rückstellkraft der Membranfeder 8 zumindest in einem Abschnitt unterstützen, der Ausgehend von der maximalen Auskuppelposition in Richtung einkuppeln sich erstreckt. Die maximale Auskuppelposition, also die Endlage der Ausjuppelstellung, kann durch die Fortsätze 11 derart begrenzt werden, dass die Abstützkraft deutlich ansteigt. Erfindungsgemäß kann dies dadurch erfolgen, dass mit Erreichen der maximalen Auskuppelpositon der die Einkuppelbewegung der Membranfeder 8 unterstützende Federweg der Fortsätze 11 aufgebraucht ist

### Bezugszeichenliste

- 1: Reibungskupplung
- 2: Gehäuse
- 3: Schwungrad
- 4: Drehachse
- 5: Anpressplatte
- 6: Reibbelag
- 7: Kupplungsscheibe
- 8: Membranfeder
- 9: Halteelemente
- 10: Stützelement
- 11: Fortsätze
- 12: Teilkreisdurchmesser
- 13: Endbereich
- 15: Verschleißausgleichsvorrichtung
- 16: Halterungsbereiche
- 17: Eingriffsabschnitte
- 18: Befestigungsabschnitte
- 19: Betätigungsweg
- 21: Tellerfederabschnitt
- 22: Betätigungszungen
- 23: Abstützbereich
- 24: Versteifungssicken
- 25: Durchgriffsbereichen
- 26: Auflagebereich
- 27: Auflageabschnitt

## Patentansprüche

1. Reibungskupplung, insbesondere für ein Kraftfahrzeug, mit
- einem Gehäuse (2), das mit einem Schwungrad (3) um eine gemeinsame Drehachse rotiert und mit einer Brennkraftmaschine verbunden ist,
- eine im Gehäuse (2) drehfest aber axial verlagerbar Anpressplatte (5),
- eine zwischen der Anpressplatte (5) und einer Reibfläche des Schwungrades (3) mit mindestens einem Reibbelag (6) versehene Kupplungsscheibe (7).
- einer Membranfeder (8) mit daran ausgebildeten Betätigungszungen (22) zur Verschwenkung der Membranfeder (8) um ihren Abstützbereich (23), welche die Anpressplatte (5) mit einer Anpresskraft zur Beaufschlagung des Reibbelages (6) beaufschlagen kann und sich an einem am Gehäuse (2) ausgebildeten Auflagebereich (26) abstützt,
- vom Gehäuse (2) sich erstreckende Halteelemente (9), die die Membranfeder (8) gegenüber dem Gehäuse (2) direkt oder indirekt positionieren, an Durchgriffsbereichen (25) der Betätigungszungen (22) durchgreifen und radial innerhalb des Auflagebereiches angebracht sind,
**dadurch gekennzeichnet, dass**
ein Stützelement (10) mit einem Auflageabschnitt (27) vorgesehen ist, an dem die Membranfeder (8) während eines Auskuppelvorganges abgestützt wird und mit dem Auflageabschnitt (27) unter einer Vorspannung an der Membranfeder (8) anliegt, wobei das Stützelement (10) durch das Halteelement (9) gegenüber der Membranfeder (8) gehalten wird und nach radial innerhalb der Halteelemente (9) sich erstreckende Fortsätze (11) aufweist, welche sich an den Betätigungszungen (22) abstützen.

2. Reibungskupplung, insbesondere für ein Kraftfahrzeug, mit
- einem Gehäuse (2), das mit einem Schwungrad (3) um eine gemeinsame Drehachse rotiert und mit einer Brennkraftmaschine verbunden ist,
- eine im Gehäuse (2) drehfest aber axial verlagerbar Anpressplatte (5),
- eine zwischen der Anpressplatte (5) und einer Reibfläche des Schwungrades (3) mit mindestens einem Reibbelag (6) versehene Kupplungsscheibe (7).
- einer Membranfeder (8) mit daran ausgebildeten Betätigungszungen (22) zur Verschwenkung der Membranfeder (8) um ihren Abstützbereich (23), welche die Anpressplatte (5) mit einer Anpresskraft zur Beaufschlagung des Reibbelages (6) beaufschlagen kann und sich direkt oder indirekt an einem am Gehäuse (2) ausgebildeten Auflagebereich (26) abstützt,
- vom Gehäuse (2) sich erstreckende Halteelemente (9), die die Membranfeder (8) gegenüber dem Gehäuse (2) direkt oder indirekt positionieren, an Durchgriffsbereichen (25) der Betätigungszungen (22) durchgreifen und radial innerhalb des Auflagebereiches angebracht sind,
**dadurch gekennzeichnet, dass**
ein Stützelement (10) mit einem Auflageabschnitt (27) vorgesehen ist, an dem die Membranfeder (8) während eines Auskuppelvorganges abgestützt wird, wobei das Stützelement (10) durch das Halteelement (9) gegenüber der Membranfeder (8) gehalten wird und davon sich erstreckende Fortsätze (11) aufweist, welche bei einem Auskuppelvorgang an der Membranfeder mit einer in Richtung Einkuppelstellung wirkenden Kraft an der Membranfeder (8) abstützbar sind.

3. Reibungskupplung nach Anspruch 2,
**dadurch gekennzeichnet, dass** die Fortsätze (11) sich nach radial innerhalb der Halteelemente (9) erstrecken.

4. Reibungskupplung nach Anspruch 2,
**dadurch gekennzeichnet, dass** die Fortsätze (11) im eingekuppelten Zustand der Reibungskupplung mit ihren Endbereichen (13) axial beabstandet zur Membranfeder (8) sind.

5. Reibungskupplung nach Anspruch 2,
**dadurch gekennzeichnet, dass** die Fortsätze (11) im eingekuppelten Zustand der Reibungskupplung mit ihren Endbereichen (13) an der Membranfeder (8) anliegen.

6. Reibungskupplung nach zumindest einem der Ansprüche 2 , 4 oder 5,
**dadurch gekennzeichnet, dass** die Fortsätze (11) der Reibungskupplung mit ihren Endbereichen (13) an Betätigungszungen (22) der Membranfeder (8) anliegen oder zur Anlage kommen.

7. Reibungskupplung nach Anspruch 2,
**dadurch gekennzeichnet, dass** die in Richtung Einkuppelstellung wirkende Kraft der Fortsätze (11) im eingekuppelten Zustand der Reibungskupplung ein Minimum aufweist.

8. Reibungskupplung nach Anspruch 2,
**dadurch gekennzeichnet, dass** die in Richtung Einkuppelstellung wirkende Kraft der Fortsätze (11) im eingekuppelten Zustand geringer ist als im ausgekuppelten Zustand der Reibungskupplung.

9. Reibungskupplung nach Anspruch 2,
**dadurch gekennzeichnet, dass** die in Richtung Einkuppelstellung wirkende Kraft der Fortsätze (11) in Richtung der ausgekuppelten Stellung der Reibungskupplung ansteigt.

10. Reibungskupplung nach Anspruch 2,
**dadurch gekennzeichnet, dass** die in Richtung Einkuppelstellung wirkende Kraft der Fortsätze (11) im Bereich der ausgekuppelten Stellung der Reibungskupplung im Bereich eines Maximums sich befindet.

11. Reibungskupplung nach Anspruch 2,
**dadurch gekennzeichnet, dass** die Fortsätze (11) ausgehend von der eingekuppelten Stellung der Reibungskupplung erst nach einer Verschwenkbewegung der Membranfeder (8) zur Anlage an dieser kommen.

12. Reibungskupplung nach Anspruch 11,
**dadurch gekennzeichnet, dass** die Verschwenkbewegung zumindest den Abschnitt umfasst, bis zu dem die Anpressplatte (5) von den Reibbelägen (6) abhebt.

13. Reibungskupplung nach Anspruch 11 oder 12,
**dadurch gekennzeichnet, dass** die Verschwenkbewegung zumindest den Abschnitt umfasst, bis zu dem die Reibbeläge (6) sich axial entspannt haben.

14. Reibungskupplung nach Anspruch 11,
**dadurch gekennzeichnet, dass** die Verschwenkbewegung zumindest den Abschnitt umfasst, bis zu dem die Reibbeläge (6) von den Gegenreibflächen an der Anpressplatte (5) oder dem Schwungrad (3) beginnen abzuheben.

15. Reibungskupplung nach Anspruch 1 oder 2 **dadurch gekennzeichnet, dass** im Bereich der Maximalen Auskuppelstellung der Reibungskupplung das Stützelement (10) die Auskuppelbewegung der Membranfeder (8) begrenzt.

16. Reibungskupplung nach einem der Ansprüche 1 oder 2 **dadurch gekennzeichnet, dass** die Fortsätze (11) während eines Auskuppelvorganges durch Anlage an den Betätigungszungen den Ausrückkraftverlauf zumindest bereichsweise beeinflussen.

17. Reibungskupplung nach Anspruch 1 oder Anspruch 16,
**dadurch gekennzeichnet, dass** die Fortsätze (11) im eingekuppelten Zustand eine hohe Abstützkraft und im ausgekuppelten Zustand eine geringere Abstützkraft auf die Betätigungszungen (22) ausüben.

18. Reibungskupplung nach einem der vorhergehenden Ansprüche,
**dadurch gekennzeichnet, dass** das Stützelement (10) als Tellerfeder ausgebildet ist

19. Reibungskupplung nach einem der vorhergehenden Ansprüche,
**dadurch gekennzeichnet, dass** die Fortsätze (11) zusammen mit dem Stützelement (10) ein Bauteil bilden, welches eine Federkraftlinie ähnlich einer Membranfeder aufweist.

20. Reibungskupplung nach einem der vorhergehenden Ansprüche,
**dadurch gekennzeichnet, dass** die Abstützkraft der Fortsätze (11) auf die Membranfeder (8) zumindest über einen Teilbereich des Auskuppelweges, insbesondere über einen ersten Teilbereich abnimmt.

21. Reibungskupplung nach einem der vorhergehenden Ansprüche,
**dadurch gekennzeichnet, dass** die Abstützkraft der Fortsätze (11) während eines Auskuppelvorganges nach Abfallen der Abstützkraft in einem ersten Teilweg wieder ansteigt.

22. Reibungskupplung nach einem der vorhergehenden Ansprüche,
**dadurch gekennzeichnet, dass** die Fortsätze (11) einstückig mit dem Stützelement (10) ausgebildet sind.

23. Reibungskupplung nach einem der vorhergehenden Ansprüche,
**dadurch gekennzeichnet, dass** das Stützelement (10) aus Federstahl besteht.

24. Reibungskupplung nach einem der vorhergehenden Ansprüche,
**dadurch gekennzeichnet, dass** das Stützelement (10) als ringscheibenförmiges Bauteil mit hoher axialer Steifheit ausgeführt ist.

25. Reibungskupplung nach einem der vorhergehenden Ansprüche,
**dadurch gekennzeichnet, dass** das Stützelement (10) eine topfartige Form aufweist.

26. Reibungskupplung nach einem der vorhergehenden Ansprüche,
**dadurch gekennzeichnet, dass** das Stützelement (10) mit seinem Auflageabschnitt federvorgespannt an der Membranfeder anliegt.

27. Reibungskupplung nach einem der vorhergehenden Ansprüche,
**dadurch gekennzeichnet, dass** Betätigungszungen Ausnehmungen zum Durchgriff der Halteelemente aufweisen.

28. Reibungskupplung nach einem der vorhergehenden Ansprüche,
**dadurch gekennzeichnet, dass** die Halteelemente Distanzbolzen sind, die an dem Gehäuse angebracht sind.

29. Reibungskupplung nach Anspruch 1 oder 2 oder, 27 oder 28,
**dadurch gekennzeichnet, dass** nur eine Teilanzahl der Durchgriffsbereiche von einem Halteelement durchgriffen werden.

30. Reibungskupplung nach einem der Ansprüche 27 bis 29,
**dadurch gekennzeichnet, dass** eine Anzahl der Betätigungszungen Ausnehmungen zum Durchgriff der Halteelemente aufweisen und eine Anzahl nicht diese Ausnehmungen aufweist.

31. Reibungskupplung nach einem der vorhergehenden Ansprüche,
**dadurch gekennzeichnet, dass** Fortsätze (11) an den Betätigungszungen sich abstützen, welche keine Ausnehmungen zum Durchgriff der Halteelemente aufweisen.

32. Reibungskupplung nach einem der vorhergehenden Ansprüche,
**dadurch gekennzeichnet, dass** das Stützelement mit zumindest einem Halteelement in Umfangsrichtung formschlüssig verbunden ist.

33. Reibungskupplung nach einem der vorhergehenden Ansprüche,
**dadurch gekennzeichnet, dass** das Stützelement mit zumindest einem Halteelement in Umfangsrichtung drehfest verbunden ist.

34. Reibungskupplung nach einem der vorhergehenden Ansprüche,
**dadurch gekennzeichnet, dass** das Stützelement vermittels dem Halteelement in Umfangsrichtung drehfest gegenüber diesem gelagert ist.

35. Reibungskupplung nach einem der Ansprüche 31 bis 33 oder nach Anspruch 1,
**dadurch gekennzeichnet, dass** das Stützelement zur drehfesten Lagerung am Halteelement eine Vertiefung aufweist, in die dieses eingreift.

36. Reibungskupplung nach einem der vorhergehenden Ansprüche,
**dadurch gekennzeichnet, dass** das Stützelement drehfest gegenüber der Membranfeder gelagert ist.

37. Reibungskupplung nach einem der vorhergehenden Ansprüche **dadurch gekennzeichnet, dass** das Stützelement in Umfangsrichtung formschlüssig mit der Membranfeder in Eingriff steht

38. Reibungskupplung nach Anspruch 1 oder Anspruch 36,
**dadurch gekennzeichnet, dass** jeweils ein Fortsatz mit seinem Abstützbereich an einer Betätigungszunge aufliegt.

39. Reibungskupplung nach einem der vorhergehenden Ansprüche,
**dadurch gekennzeichnet, dass** zumindest zwei Fortsätze (11) über den Umfang verteilt sind

40. Reibungskupplung nach Anspruch 1 oder Anspruch 39,
**dadurch gekennzeichnet, dass** die Fortsätze (11) gleichmäßig über der Umfang verteilt sind.

41. Reibungskupplung nach Anspruch 1 oder einem der vorhergehenden Ansprüche,
**dadurch gekennzeichnet, dass** zumindest zwei benachbarte Fortsätze (11) ungleichmäßig beabstandet sind von mindestens einem weiteren Fortsatz des Stützelementes.

42. Reibungskupplung nach einem der vorhergehenden Ansprüche,
**dadurch gekennzeichnet, dass** das Stützelement drehfest mit der Membranfeder verbunden ist.

43. Reibungskupplung nach einem der vorhergehenden Ansprüche,
**dadurch gekennzeichnet, dass** das Stützelement samt den Fortsätzen (11)n aus einem Blechteil ausgestanzt wird.

44. Reibungskupplung nach einem der vorhergehenden Ansprüche,
**dadurch gekennzeichnet, dass** das radial innenliegende Ende der Fortsätze (11) auf einem Radius zwischen 40 % und 65 % des Außenradius des Stützelementes liegt.

45. Reibungskupplung nach einem der vorhergehenden Ansprüche,
**dadurch gekennzeichnet, dass** das radial innenliegende Ende der Fortsätze (11) eine Abflachung oder Verrundung aufweist, die der Gleitbewegung während eines Kuppelvorganges an den Betätigungszungen angepasst ist.

46. Reibungskupplung nach einem der vorhergehenden Ansprüche,
**dadurch gekennzeichnet, dass** Betätigungszungen in Radialrichtung verlaufende Versteifungssicken aufweisen.

47. Reibungskupplung nach einem der vorhergehendem Ansprüche,
**dadurch gekennzeichnet, dass** zumindest eine Versteifungssicke sich über den Erstreckungsbereich der Betätigungszunge hinaus nach radial außen erstreckt.

48. Reibungskupplung nach einem der vorhergehendem Ansprüche,
**dadurch gekennzeichnet, dass** die Betätigungszungen in ihren in den Tellerfederbereich der Membranfeder einmündenden Endbereichen Rundungen aufweisen.

49. Reibungskupplung nach einem der vorhergehendem Ansprüche,
**dadurch gekennzeichnet, dass** die Halteelemente radial beabstandet zum Abstützbereich sind.

50. Reibungskupplung nach einem der vorhergehenden Ansprüche,
**dadurch gekennzeichnet, dass** die Reibungskupplung eine Vorrichtung zum automatischen Verschleißausgleich des Verschleißes der Reibbeläge aufweist.

51. Reibungskupplung nach Anspruch 36,
**dadurch gekennzeichnet, dass** die Verschleißausgleichsvorrichtung zwischen der Membranfeder und der Anpressplatte ausgebildet ist.

52. Reibungskupplung nach einem der vorhergehendem Ansprüche,
**dadurch gekennzeichnet, dass** die Anlage der Membranfeder am Gehäuse steif ausgeführt ist.

53. Reibungskupplung nach Anspruch 1 oder Anspruch 2,
**dadurch gekennzeichnet, dass** die Fortsätze (11) im eingekuppelten Zustand eine geringe Abstützkraft und im ausgekuppelten Zustand eine größere Abstützkraft auf die Betätigungszungen ausüben.

54. Reibungskupplung nach Anspruch 39, **dadurch gekennzeichnet, dass** die Fortsätze (11) im eingekuppelten Zustand eine gegen Null gehende Abstützkraft aufweisen.

55. Reibungskupplung nach Anspruch 39 oder 40, **dadurch gekennzeichnet, dass** die Abstützkraft der Fortsätze (11) nach einem Teil des Auskuppelweges der Membranfeder ansteigt.

56. Reibungskupplung nach einem der vorhergehenden Ansprüche, **dadurch gekennzeichnet, dass** das Schwungrad durch ein Zweimassenschwungrad gebildet wird.

57. Reibungskupplung nach einem der vorhergehenden Ansprüche **dadurch gekennzeichnet, dass** an den Betätigungszungen eine Ausrückeinheit, inbesondere eine automatisierte Kupplungsbetätigung angreift.
